# EUROPÄISCHE PATENTSCHRIFT

(11) **EP 1 883 309 B1**
(45) Veröffentlichungstag und Bekanntmachung des Hinweises auf die Patenterteilung: **29.07.2009**
(21) Anmeldenummer: 06722993.0
(22) Anmeldetag: 31.01.2006
(51) Int. Cl.: A23F 3/14

(54) **VERFAHREN ZUR ZUBEREITUNG VON TEEGETRÄNKEN AUS SCHWARZEM ODER GRÜNEM TEE**
METHOD FOR PREPARING TEA FROM BLACK OR GREEN TEA LEAVES
PROCEDE POUR PREPARER UNE BOISSON AU THE NOIR OU VERT

(30) Priorität: 01.02.2005 DE 102005004815
(43) Veröffentlichungstag der Anmeldung: 06.02.2008
(73) Patentinhaber: Körber, Helmut, 06114 Halle/S. (DE)
(72) Erfinder: PIESCHEL, Friedemann, 65812 Bad Soden (DE)
(74) Vertreter: Tragsdorf, Bodo
(86) Internationale Anmeldenummer: PCT/EP2006/000840
(87) Internationale Veröffentlichungsnummer: WO 2006/082027

(56) Entgegenhaltungen:
- EP-A- 0 099 459
- EP-A- 0 481 262
- WO-A-99/59425
- DE-A1- 1 692 282
- DATABASE WPI Section Ch, Week 200523 Derwent Publications Ltd., London, GB; Class D13, AN 2001-317151 XP002383969 & CN 1 086 112 C (WANG X) 12. Juni 2002 (2002-06-12)
- DATABASE WPI Section Ch, Week 200416 Derwent Publications Ltd., London, GB; Class D13, AN 2004-157369 XP002383970 & CN 1 439 278 A (QI H) 3. September 2003 (2003-09-03)

## Beschreibung

Die Erfindung bezieht sich auf ein Verfahren zur Zubereitung von Teegetränken, unter Verwendung von Teeblättern aus schwarzem oder grünem Tee oder Mischungen aus diesen und Brühwasser, zur Verbesserung der Qualität des Aufgusses.

Die Qualität von Aufgüssen von schwarzem oder grünem Tee hängt bekanntlich nicht nur von der Qualität der verwendeten Teeblätter und Ihrer Verarbeitung, sondern in ganz entscheidendem Maß auch von der Beschaffenheit des verwendeten Brühwassers ab. Dabei geht es hier nicht um qualitative Mängel des verwendeten Wassers wie Eigengeschmackl Geruch oder gar gesundheitlich bedenkliche Inhaltsstoffe, sondern um völlig unbedenkliche und allgegenwärtige Härtebildner, die sogar aus gesundheitlicher Sicht den Wert des Wassers erhöhen und zum Schutz des Leitungsnetzes in einem Mindestmaß vorhanden sein müssen. So schreibt die Trinkwasserverordnung eine Säurekapazität von mindestens 1,5 mol/m³ vor, was einer Carbonathärte von ca. 4 °dH entspricht.

In der Regel steht dem Verbraucher ein Trinkwasserangebot zu Verfügung, das deutlich höhere Carbonathärten aufweist. Die Verwendung derartiger Wässer als Brühwasser zur Zubereitung von Tee besitzt jedoch einige Nachteile.

Aus schwarzem Tee aufgebrühtes Getränk enthält, polyphenolische Verbindungen, die für die erwünschten gesundheitlichen, organoleptischen und ästhetischen Eigenschaften des Getränks in hohem Maße verantwortlich sind. Bei der Verwendung von Brühwasser mit Carbonathärten von > 4 °dH wird schwarzer Tee meist schon kurz nach der Brühzeit deutlich trüb und es bildet sich eine gut sichtbare "Haut".

Die gebildete "Haut" bleibt meist an der Wandung des Trinkgefäßes haften und erschwert deren Reinigung. Zusätzlich dunkelt der Tee zusehends nach und verfärbt sich von einem dunklen Rotbraun nach Schwarz, das wegen der Trübung oft sogar grau-schwarz aussieht. Diese Erscheinungen wirken sich nachteilig auf die ästhetischen Eigenschaften des Getränks aus.

Um diesen Nachteil zu beseitigen ist es bekannt, das Brühwasser mehrmals abzukochen oder relativ lange sieden zu lassen, wobei die Hydrogencarbonate der Härtebildner zerfallen, Kohlendioxid entweicht und Kalk abgeschieden wird.

Bekannt sind auch Filtervorrichtungen, die Härtebildner durch Ionenaustauscher binden. Sie sind jedoch nur nach Vorbereitung (Quellzeit) oder unter Beachtung von Vorsichtsmaßnahmen (gekühlte Lagerung gegen Bakterienwuchs) verfügbar zu halten und benötigen spezielle Filtergefäße. Diese Verfahrensweise ist im praktischen Gebrauch mit einem erhöhten Aufwand und zusätzlichen Kosten für die Filter verbunden.

In der EP 0481 262 B1 ist eine Verfahrensweise beschrieben, bei der die polyphenolischen Verbindungen, die in den feuchten Teeblättern enthalten sind, erhitzt und bei einem Druck, der den Wasserdampfdruck bei der Reaktionstemperatur überschreltet, oxidiert werden. Die so behandelten Teeblätter werden zu Instant-Teeprodukten weiterverarbeitet,

Durch die Oxidation gehen die gesundheitlich vorteilhaften Eigenschaften der polyphenolischen Verbindungen verforen.

Aus der DE 1 692 282 A ist ein Verfahren zur Herstellung eines trockenen löslichen Tee-Extraktes zur Zubereitung eines Teegetränkes aus Wasser und einem trockenen lösilchen Tee-Extrakt bekannt, wobei dem geklärten Tee-Extrakt ein Puffersystem, bestehend aus Citronensäure und Kallumcitrat, zugesetzt wird.

Die EP 0 099 489 A1 offenbart ein Verfahren zur Herstellung einen kaltlöslichen pulverförmigen Tee-Extraktes als Instanttee unter Verwendung von Citronensäure und Natriumcitrat.

Der Erfindung liegt die Aufgabe zugrunde, geeignete Maßnahmen vorzuschlagen, die nach dem Brühvorgang von schwarzem oder grünem Tee eine "Trübung" und die Bildung einer "Haut" verhindern, einen geringen Aufwand erfordern, kostengünstig sind und die geschmacks- sowie gesundheltlichen Eigenschaften des Teegetränks nicht beeinflussen. Erfindungegemäß wird die Aufgabe durch die im Anspruch 1 genannten Merkmale gelöst. Vorteilhafte Ausgestaltungen und Welterbildungen sind Gegenstand der Anspruche 2 bis 10. Die Ansprüche 11 bis 13 beziehen sich auf besondere Verwendungen und Gegenstand der Ansprüche 14 bis 17 sind zugehörige Teebeutel, Teefilter oder Trägermaterial.

Vöilig überraschend wurde gefunden, dass durch den Zusatz von Kallum-, Natrium- oder Ammonium-Citraten, einzeln oder als Gemisch, die in reiner wässriger Lösung einen pH-Wert von 5 bis 7 ergeben, vor oder während des Erhltzens des Brühwassers oder während des Brühvorganges, nach dem sogenannten "Ziehen" des Tees keine "Trübung" und

Bildung einer "Haut" mehr aufgetreten sind.

Unter "Brühwasser" ist aus dem örtilchen Leitungsnetz stammendes Wasser zu verstehen, das vor dem Aufbrühen keiner weiteren Behandlung unterzogen wurde.

Der aufgebrühte Tee war auch nach vollständigern Abkühlen noch klar durchsichtig, ohne die ansonsten übliche Blidung einer schiliernden "Haut" auf der Oberfläche. Auch bei längerem Stehenlassan über mehrere Stunden waren keine Veränderungen im Eigenschaftsbild zu erkennen. Der ästhetische Gesamteindruck des Teegetränks war hervorragend.

An Hand von Versuchen konnte festgesteilt werden, dass der erfindungsgemäße Zusatz von Citraten oder deren Gemischen bei Konzentrationen bis zu etwa 2 g Citrat/l in destilliertem Wasser als geschmacksneutral empfunden wird, obwohl ein pH-Wert von etwa 6 vorliegt. Damit können die vorgeschlagenen Citrate bzw. Citrat-Gemische in Konzentration bis zu 2 g Citrat/l Brühwasser eingesetzt werden.

Besitzt das eingesetzte Wasser nur die gesetzlich vorgeschriebene Mindestkarbonathärte (etwa 4·dH), so wird ein pH-Wert von 6 nicht unterechritten und damit kein Säuerungsoffekt wahrgenommen. Wird zur Zubereitung des Teegetränks Wasser mit einer Karbonathärte von über 25 °dH eingesetzt, was In der Praxis äußerst selten vorkommt, so reicht zwar die Säurekapazität des Citratzusatzes nicht mehr aus, um alle Bicarbonate zu zerstören. Unabhängig davon wird jedoch die Fällung von Mg-hydroxocarbonaten und Calciumcarbonat verhindert. Durch die Kombination von schwach ansäuernder und gut komplexierender Wirkung der erfindungsgemäßen Citrate wird eine geschmacklich wahrnehmbare saure Reaktion von Teeaufgüssen ausgeschlossen, obwohl es zu keinen unerwünschten Trübungen des Teegetränks durch Karbonat-Fällungen kommt.

Die vorgeschlagenen Citrate oder deren Gemische sind ausreichend stark komplexierend, um jegliche Fällungen von Karbonathärtebildnern bei Siedhitze zu vermeiden. Gleichzeitig komplexieren sie auch im Trinkwasser enthaltene untoxische Schwermetalispuren so stark, dass durch sie hervorgerufene Fällungen und Verfärbungen im Teeaufguss deutlich verlangsamt werden.

Durch den Citratzusatz wurde anscheinend die Qualität des Brühwassers so verbessert, dass die gesundheitlich wertvollen Polyphenole nicht in unlösliche Verbindungen überführt wurden und daher nach der Einnahme des Tee im menschlichen Organismus ihre bekannte gesundheitsfördernde Wirkung als Antioxydantien entfalten können.

Von Vorteil ist auch, dass bedingt durch den Citratzusatz, sich der pH-Wert des Wassers während des Brühvorganges nicht wesentlich verändert. Bekanntlich kommt es bei Verwendung von Trinkwasser mit hoher Karbonathärte während des Brühvorganges zu leicht alkalischen Reaktionen, die sich nachteilig auf den Geschmack und Geruch auswirken.

Als Citrate können insbesondere Diammonium-, Dikalium- oder Dinatriumcitrat im Gemisch mit bis zu 90 Mol% Monoammonium-, Monokalium und Mononatriumcitrat eingesetzt werden.

Die Einsatzmengen sind sehr gering und betragen mindestens 0,1 g Citrat/l Brühwasser. Vorzugsweise beträgt die Obergrenze 2 g Citrat/l Brühwassers. Die mit Einnahme des Teegetränks verbundene Aufnahme an Citrat ist physiologisch vollkommen unbedenklich. Bekanntlich spielen Citrate im menschlichen Organismus eine zentrale Rolle (Kohlehydratstoffwechsel ("Citronensäurezyklus")). Auch die Lebensmittelzusatzstoffverordnung schreibt keine Obergrenze für den Zusatz von Citronensäure und damit Citrat zu Lebensmitteln vor.

Im Rahmen von Versuchsreihen konnte festgestellt werden, dass mit abnehmender Carbonathärte des Brühwassers die Einsatzmengen an Citrat bis zur angegebenen Untergrenze reduziert werden können. Bei mittleren Carbonathärten wurden mit Citratzusätzen von 0,2 g/l Brühwasser bereits sehr gute Ergebnisse erzielt.

Die eingesetzten Citrate sind handelsübliche Produkte. Sie können auch durch Neutralisation von Citronensäure mit der entsprechenden stöchiometrischen Menge Soda, Pottasche, Ammoniakwasser und dgl. oder durch Vermischen von Citronensäure mit Triammonium-, Trikalium- oder Trinatriumcitrat im Molverhältnis von ca. 1,9:1,1 bis 1:2 gewonnen werden. Wird Citronensäure mit ihren tertiären Salzen vermischt, so kann im Falle einer Anwendung im festen Zustand auf ein Auflösen und isolieren der festen Salze verzichtet werden. Der pH-Wert, den die Citrate oder deren Gemische in ca. 0,1 %iger Lösung ergeben, sollte vorzugsweise bei 6 bis 6,5 liegen und geschmacklich nicht als sauer wahrnehmbar sein.

Die geringen Einsatzmengen an Citrat verursachen im Vergleich zu anderen bekannten Maßnahmen nur sehr geringe zusätzliche Kosten. Die erforderliche Menge an Citrat kann wahlweise entweder dem Brühwasser oder dem aufzubrühenden Tee zugesetzt werden. Der Aufwand der Zugabe des Citrates unmittelbar beim Brühvorgang kann umgangen werden, indem beim an sich üblichen Einsatz von mit Tee gefüllten Teebeuteln, die erforderliche Menge an Citrat bereits während der Konfektionierung der Teebeutel zugesetzt wird. Es besteht auch die Möglichkeit, Teebeutelmaterial mit einer Citratlösung zu tränken. In analoger Weise können auch Trägermaterialien, wie Papierstreifen, in einer Citratlösung getränkt werden, die dann unmittelbar vor dem Brühvorgang in das Brühwasser eingehängt werden, wobei das Citrat durch Inkontaktbringen mit dem Brühwasser gelöst wird. Beim Einsatz von Teefiltern zur Einmalverwendung besteht die Möglichkeit, diese bereits während des Herstellungsprozesses mit einer Citratlösung zu tränken. Durch den Kontakt mit dem Brühwasser wird dann das Citrat aus dem Filter herausgelöst. Gegenstand der eingereichten Erfindung sind somit auch die erforderlichen Hilfsmittel zur Zubereitung von grünem oder schwarzem Tee, wie Teebeutel, Teefilter oder Trägermaterial, die in unmittelbarem Zusammenhang mit der Verwirklichung des erfinderischen Gedankens stehen.

Die Erfindung bezieht sich auch auf die Verwendung der an sich bekannten Kalium-, Natrium- oder Ammonium-Citrate, einzeln oder als Gemisch, als Zusatz zur Verbesserung der Qualität von Brühwasser zur Zubereitung von Teegetränken unter Verwendung von Teeblättern aus schwarzem oder grünem Tee oder Mischungen aus diesen. Der Einsatz an Citraten ist auf solche beschränkt, die in reiner wässriger Lösung einen pH-Wert von 5 bis 7 ergeben. Unter "Mischungen" sind die vom Hersteller angebotenen handelsüblichen Abpackungen zu verstehen.

Die durch den erfindungsgemäßen Zusatz von Citrat gebildeten Citrationen sind geschmacksneutral, analog wie Ammonium-, Natrium- und Kaliumionen, sodass der aufgebrühte Tee geschmacklich nicht beeinflusst wird.

Als zusätzlicher Vorteil hat sich herausgestellt, dass bei Verwendung von gechlortem Wasser als Brühwasser durch einen Citratzusatz vor dem Erhitzen des Brühwassers die Bildung einer unangenehmen Geschmacksnote, bedingt durch den Einfluss von Chlor auf den Tee, unterbunden wird. Dadurch kann auf einen Einsatz von aktivkohlehaltigen Filtern zur Vermeidung von Geschmacksbeeinträchtigungen durch Chlor verzichtet werden.

Die überraschende Wirkung der zugesetzten Kalium-, Natrium- oder Ammonium-Citrate ist nicht allein auf deren an sich bekannte Pufferwirkung zurückzuführen, sondern nur in Kombination mit nicht vorhersehbaren Komplexbildungen.

Vergleichsversuche beim Brühvorgang von schwarzem Tee durch Zusatz von Lösungen mit Kaliumphosphaten, -tartraten, -lactaten und -acetaten, die auf vergleichbare molare Konzentrationen und durch Zugabe von Pottasche oder freier Säure auf vergleichbare pH-Werte (5 bis 7) gebracht wurden, ergaben nach wie vor eine "Trübung" und die Bildung einer unerwünschten "Haut".

### Beispiele:

### A: Versuche ohne Citratzusatz

### Versuch A1:

In einem elektrischen Wasserkocher (2000 W) wurde 1I Trinkwassers (hart) aus einem regionalen Versorgungsnetz (Bad Soden) mit einer Gesamthärte von 24 °dH und Carbonathärte von 18 °dH bis zur Selbstabschaltung des Kochers bei lebhaftem Sieden erhitzt In ein hochformatiges 400 ml Becherglas wurde ein handelsüblicher Teeaufgussbeutel "Schwarzer Tee" einer härteempfindlichen Teemarke gegeben, und anschließend 200 ml des zubereiteten Brühwassers (noch sprudelnd) aufgefüllt.

Nach 1 Minute, nach dem Auffüllen des Brühwassers, wurde der Teebeutel angehoben, bis über die Wasseroberfläche, und wieder abgesenkt. Dieser Vorgang wurde in Zeitabständen von jeweils 1 Minute noch zweimal durchgeführt. Nach einer weiteren Minute wurde der Teebeutel aus dem Brühwasser herausgehoben und gut abtropfen gelassen, aber nicht ausgedrückt. Die gesamte Brühzeit für das Teegetränk T1 betrug somit 3 Minuten.

### Versuch A2:

In analoger Weise wie unter A1 beschrieben wurde parallel ein weiterer Versuch mit einem weichen Trinkwasser (aus einer Taunus-Gemeinde stammend) mit einer Gesamthärte gleich Carbonathärte von 4 °dH durchgeführt und nach einer Gesamtbrühzeit von 3 Minuten das Teegetränk T2 erhalten.

### Versuch A3:

Dieser Versuch wurde in analoger Weise wie der Versuch A1 durchgeführt, wobei anstelle von "Schwarzem Tee" einer härteempfindlicher "Grüner Tee" verwendet wurde, in Form von Teeblättern in einer Menge von 2g. Mit einem im Glas belassenen Teelöffel wurde in den angegebenen Minutenabständen umgerührt und nach Beendigung der Brühzeit (3 Minuten) die Teeflüssigkeit als Teegetränk T3 in ein zweites Becherglas abgegossen.

### Versuch A4:

In analoger Weise wie unter A3 beschrieben wurde parallel ein weiterer Versuch mit einem Trinkwasser (weich) mit einer Gesamthärte gleich Carbonathärte von 4 °dH durchgeführt und nach einer Gesamtbrühzeit von 3 Minuten das Teegetränk T4 erhalten.

Nach Zeitabständen von 1, 3, 10, 30 Minuten, 1 Stunde und 24 Stunden, nach der Entnahme des Teebeutels, wurden die Teegetränke T1 und T2 sowie die Teegetränke T3 und T4 visuell beurteilt, hinsichtlich Trübung, Hautbildung und Dunkelfärbung.

### Versuch A5:

In analoger Weise wie unter A1 wurde ein Teegetränk zubereitet, wobei im Unterschied zu dem Versuch A1 gechlortes, mittelhartes Trinkwasser aus der Ortschaft Grafenwöhr (Gesamthärte12 °dH, Carbonathärte 10 °dH) verwendet wurde.

Das erhaltene Teegetränk war deutlich trüb und wies eine verstärkte Hautbildung sowie Verfärbungen auf. Außerdem besaß dieses Teegetränk einen unangenehmen Beigeschmack.

### Beurteilung der Teegetränke T1 und T2:

Bereits zum Ende der Brühzeit wies das Teegetränk T1 eine leichte Trübung mit einer gut sichtbaren "Haut" auf.

Nach 10 Minuten war die Haut des Teegetränkes T1 "steif", der Tee deutlich trüb und sichtbar nachgedunkelt. Außerdem hatte der Tee T1 einen fischartigen Beigeschmack und

Geruch. Nach einer Stunde war der Tee völlig schwarz.

Im Gegensatz dazu blieb das Teegetränk T2 nahezu unverändert und wies eine angenehm dunkelbraune Färbung auf, auch noch nach 24 Stunden. Trübungserscheinungen oder eine Hautbildung waren visuell nicht zu erkennen. Im Laufe einer Zeitdauer von 24 Stunden konnte lediglich eine leichte Nachdunkelung festgestellt werden.

### Beurteilung der Teegetränke T3 und T4:

Das Brühen mit siedendem Wasser gilt zwar bei grünem Tee nicht als geschmacklich optimal, stellt aber eine Verschärfung des Tests gegen Trübungen und Hautbildung im Vergleich zum Aufgießen bei niederen Temperaturen dar.

An dem Teegetränk T3 war bereits nach dem Abgießen in den zweiten Becher eine Hautbildung und leichte Trübung zu erkennen.

Im Gegensatz dazu blieb das Teegetränk T4 nahezu unverändert.

Ein dem schwarzen Tee vergleichbares deutliches Nachdunkeln war bei den Teegetränken T3 und T4, auch nach 24 Stunden, nicht zu beobachten.

### B: Erfindungsgemäße Beispiele (mit Citratzusatz)

### Beispiel 1

In analoger Weise wie im Versuch T1 wurde "Schwarzer Tee" aufgebrüht, wobei dem Brühwasser (1 I) vor inbetriebnahme des Kochers 1,2 ml Dikaliumcitrat-Lösung (1,2 ml dieser Lösung wiegen 1,4 g, wobei sie 0,84 g festes Dikaliumcitrat enthält) zugesetzt wurde.

Diese wurde erhalten, indem eine nahezu gesättigte Pottaschelösung portionsweise mit der stöchiometrischen Menge kristalliner Citronensäure (Monohydrat) versetzt wurde, wobei sich eine fast gesättigte, viskose Lösung von Dikaliumcitrat ergab. 3,3 g dieser Lösung wurden in einem gesonderten Test mit 1 I destilliertem Wasser vermischt und ergaben einen pH von 6,1. Sie konnten im Geschmackstest durch mehrere Personen nicht vom reinen destillierten Wasser unterschieden werden.

Das erhaltene Teegetränk wies eine angenehm dunkelbraune Färbung auf, die erst nach 30 Minuten etwas nachdunkelte. Geschmacklich konnten keine Unterschiede im Vergleich zu dem Teegetränk T2 festgestellt werden.

Auch nach 24 Stunden waren weder eine Hautbildung noch Trübung zu erkennen, wobei der Tee jedoch eine deutlich dunklere Färbung angenommen hatte.

### Beispiel 2

Ein handelsüblicher Streifen (5 cm x 10 cm) aus Filterpapier wurde mit 1,2 ml Dikaliumcitrat-Lösung gemäß Beispiel 1 beträufelt und getrocknet.

In analoger Weise wie im Versuch T1 wurde "Schwarzer Tee" aufgebrüht, wobei der mit Citratlösung getränkte Papierstreifen vor Inbetriebnahme des Kochers in das Brühwasser (1 l) gehängt wurde.

Das erhaltene Teegetränk entsprach geschmacklich und visuell dem Teegetränk gemäß Beispiel 1.

### Beispiel 3

Ein handelsüblicher Tee-Aufgussbeutel "Schwarzer Tee" wurde mit 5 Tropfen Dikaliumcitrat-Lösung (0,3 g) (entspricht 0,18 g festes Dikaliumcitrat) gemäß Beispiel 1 beträufelt und nach dem Trocknen an der Luft zur Zubereitung von Tee, analog wie im Versuch A1, eingesetzt.

Das erhaltene Teegetränk entsprach geschmacklich und visuell dem Teegetränk gemäß Beispiel 1.

### Beispiel 4

Analog wie in Beispiel 1 wurde "Schwarzer Tee" zubereitet, lediglich mit dem Unterschied, dass Wasser anderer Qualität eingesetzt wurde, nämlich gechlortes, mittelhartes Trinkwasser aus der Ortschaft Grafenwöhr (Gesamthärte 12 °dH, Carbonathärte 10 °dH).

Das erhaltene Teegetränk entsprach geschmacklich und visuell dem Teegetränk gemäß Beispiel 1.

Lediglich die Dunkelfärbung des Tees war nach 1 und nach 24 Stunden etwas geringer als bei dem Teegetränk gemäß Beispiel 1.

### Beispiel 5

Analog Beispiel 3 wurde ein Tee mit gechlortem Trinkwasser gemäß Beispiel 4 zubereitet. Zu jedem Zeitpunkt glichen Farbe und Aussehen dieses Teegetränks dem nach Beispiel 4 erhaltenen Teegetränk. Es stellte sich aber rasch der gleiche unangenehme Geruch und

Beigeschmack wie beim Brühversuch ohne Citratzusatz ein (Versuch A5).

Der Vergleich von Beispiel 4 mit Beispiel 5 zeigt, dass die Zerstörung von Chlor den vorherigen Kochvorgang mit Citrat erfordert, damit es beim Kontakt mit Tee nicht zu einem unangenehmen Beigeschmack kommt.

### Beispiel 6

2g "Grüner Tee" wurden mit 0,71 g fein gemahlenem handelsüblichem Diammoniumcitrat vermischt und analog wie im Versuch A3, jedoch unter Verwendung einer anderen Wasserqualität, nämlich mittelhartes Wasser (Berliner Stadtwasser, Gesamthärte 16 °dH, Carbonathärte 10 °dH), zu einem Teegetränk aufgebrüht.
Das erhaltene Teegetränk entsprach geschmacklich und visuell dem Teegetränk T4.

### Beispiel 7

In analoger Weise wie in Beispiel 1 wurde "Schwarzer Tee" zubereitet, lediglich mit dem Unterschied, dass als Citrat 0,17 g eines Gemisches aus 58,8 g fein gemahlenem Trinatriumcitratdihydrat und 21 g Citronensäuremonohydrat (beides in handelsüblicher Qualität) zugesetzt wurde.
Das erhaltene Teegetränk entsprach geschmacklich und visuell dem Teegetränk gemäß Beispiel 1.

### Beispiel 8

In analoger Weise wie in Beispiel 1 wurde "Schwarzer Tee" zubereitet, lediglich mit dem Unterschied, dass die Einsatzmenge an Dikaliumcitratlösung auf 2,86 ml erhöht wurde (2,86 ml entsprechend 2,0 g Dikaliumcitrat).
Das erhaltene Teegetränk wies gegenüber dem von Beispiel 1 eine leicht verringerte Dunkelfärbung, bereits nach 1 Stunde und auch noch nach 24 Stunden auf.

In den vorgenannten Versuchen und Beispielen wurden jeweils "Schwarzer Tee" und "Grüner Tee" der gleichen Teemarke eingesetzt.

### Beispiel 9

Ein handelsüblicher Einmalteefilter aus cellulosehaltigem Material wurde mit drei Tropfen Dikaliumcitrat-Lösung gemäß Beispiel 1 befeuchtet und getrocknet.
Die Gewichtszunahme betrug 0,1 g. Er wurde in die dafür vorgesehene Halterung zum Aufbrühen des Tee eingespannt. Als Tee wurden 9 g handelsüblicher "Schwarzer Tee" einer Sorte eingesetzt, die als sehr wasserhärteempfindlich beurteilt wird.
Als Brühwasser wurde 1 l Wasser mittlerer Härte (Region Wolfen, Gesamthärte 14 °dH, Carbonathärte 8 °dH) verwendet. Nach einer Brühzeit von 3 Minuten wurde das gewünschte Teegetränk erhalten, das mit 9a bezeichnet wurde.
Danach erfolgte ein zweiter Brühvorgang, mit dem Unterschied, dass ein citratfreier Teefilter eingesetzt und ein mit 9b bezeichnetes Teegetränk erhalten wurde.
Anschließend wurde ein dritter Brühvorgang mit einem citratfrelen Teefilter und Trinkwasser (weich) mit einer Gesamthärte gleich Carbonathärte von 4 °dH durchgeführt. Das erhaltene Teegetränk wurde mit 9c bezeichnet.
Das Teegetränk 9a wies auch nach einer Stunde keinerlei Trübung oder Hautbildung auf, dunkelte aber etwas stärker nach als das mit einem citratfreien Filter und sehr weichem Wasser zubereitete Teegetränk 9c.
Dagegen wurde das Teegetränk 9b Tee bereits nach 10 Minuten leicht trübe und es bildete sich eine leichte Haut. Nach einer Stunde war das Teegetränk 9b deutlich dunkler und wies eine zunehmende Trübung auf. Nach 24 Stunden hatte sich in der Teekanne mit dem Teegetränk 9b ein Bodensatz gebildet. Dagegen konnte bei den anderen beiden Teegetränken 9a und 9c keine Bildung eines Bodensatzes festgestellt werden.

## Patentansprüche

1. Verfahren zur Zubereitung von zum unmittelbaren Genuss bestimmten, heißen Teegetränken unter Verwendung von Teeblättern aus schwarzem oder grünem Tee oder Mischungen aus diesen und unbehandeltem, aus dem örtlichen Versorgungsnetz stammendes Wasser als Brühwasser, **dadurch gekennzeichnet, dass** vor oder während des Erhitzens des Brühwassers oder während des Brühvorganges Kalium**-,** Natrium- oder Ammonium-Citrate, einzeln oder als Gemisch, zugesetzt werden, die in reiner wässriger Lösung einen pH-Wert von 5 bis 7 ergeben.

2. Verfahren nach Anspruch 1, **dadurch gekennzeichnet, dass** als Citrate Diammonium-, Dikallum- oder Dinatriumcitrat im Gemisch mit bis zu 90 Mol% Monoammonium-, Monokalium oder Mononatriumcitrat eingesetzt werden.

3. Verfahren nach einem der Ansprüche 1 oder 2, **dadurch gekennzeichnet, dass** das Citratgemisch entweder aus Citronensäure und tertiärem Citrat oder durch entsprechende partielle Neutralisation von Citronensäure gebildet wird.

4. Verfahren nach einem der Ansprüche 1 bis 3, **dadurch gekennzeichnet, dass** die Einsatzmenge an Citrat 0,1 bis 2 g/l Brühwasser beträgt.

5. Verfahren nach einem der Ansprüche 1 bis 4, **dadurch gekennzeichnet, dass** die erforderliche Menge an Citrat dem Brühwasser zugesetzt wird.

6. Verfahren nach einem der Ansprüche 1 bis 4, **dadurch gekennzeichnet, dass** die erforderliche Menge an Citrat den Teeblättern oder deren Mischungen zugesetzt wird.

7. Verfahren nach einem der Ansprüche 1 bis 4, **dadurch gekennzeichnet, dass** die erforderliche Menge an Citrat auf ein Trägermaterial aufgetragen oder dieses mit einer Citratlösung getränkt wird, das mit dem Brühwasser in Kontakt gebracht wird.

8. Verfahren nach einem der Ansprüche 1 bis 4, **dadurch gekennzeichnet, dass** die erforderliche Menge an Citrat einem mit Tee gefüllten Teebeutel zugesetzt wird oder der Teebeutel mit einer Citratlösung getränkt wird.

9. Verfahren nach einem der Ansprüche 1 bis 4, **dadurch gekennzeichnet, dass** die erforderliche Menge an Citrat auf einen Einmalteefilter aufgetragen wird oder dieser mit einer Citratlösung getränkt wird.

10. Verfahren nach einem der Ansprüche 1 bis 9, **dadurch gekennzeichnet, dass** die Höhe der Einsatzmengen an Citrat in Abhängigkeit von der Carbonathärte des Brühwassers dosiert wird, wobei mit abnehmender Carbonathärte die Einsatzmenge bis auf 0,1 g/l Brühwasser verringert wird.

11. Verwendung von Kalium-, Natrium- oder Ammonium-Citraten, einzeln oder als Gemisch, die In reiner wässriger Lösung einen pH-Wert von 5 bis 7 ergeben, als Zusatz zum eingesetzten Tee und/oder Brühwasser, zur Zubereitung von unmittelbar zum Genuss bestimmten, heißen Teegetränken unter Verwendung von Teeblättern aus schwarzem oder grünem Tee oder Mischungen aus diesen und unbehandeltem, aus dem örtlichen Versorgungsnetz stammendem Wasser als Brühwassers.

12. Verwendung nach Anspruch 11, **dadurch gekennzeichnet, dass** die Citrate aus der Gruppe Diammonium-, Dikallum- oder Dinatriumcitrat im Gemisch mit bis zu 90 Mol% Monoammonium-, Monokallum oder Mononatriumcitrat ausgewählt sind.

13. Verwendung nach einem der Ansprüche 11 oder 12, **dadurch gekennzeichnet, dass** die Einsetzmengen an Citrat 0,1 bis 2 g/l Brühwasser betragen.

14. Teebeutel aus cellulosehaltigem Material für den Aufguss von Tee, enthaltend Teeblätter aus schwarzem oder grünem Tee oder Mischungen aus diesen, **dadurch gekennzeichnet, dass** dieser als Zusatz Kalium-, Natrium- oder Ammonium-Citrate, einzeln oder als Gemisch, die in reiner wässriger Lösung einen pH-Wert von 5 bis 7 ergeben, in einer Menge von mindestens 0,1 g/l Menge Brühwasser enthält.

15. Teebeutel nach Anspruch 14, **dadurch gekennzeichnet, dass** diesem die Citrate zugesetzt sind oder das Teebeutelmaterial in einer Citratlösung getränkt ist.

16. Einmalteefilter aus cellulosehaltigem Material für den Aufguss von schwarzem oder grünem Tee oder Mischungen aus diesen, **dadurch gekennzeichnet, dass** dieser mit einer Lösung auf Basis Kallum-, Natrium- oder Ammonium-Citraten, einzeln oder als Gemisch, die in reiner wässriger Lösung einen pH-Wert von 5 bis 7 ergeben, in einer Menge von mindestens 0,1 g Citrat/l Brühwasser, getränkt ist,

17. Trägermaterial zum inkontaktbringen mit aus dem örtlichen Versorgungsnetz stammendem Wasser als Brühwasser für den Aufguss von schwarzem oder grünem Tee oder Mischungen aus diesen, **dadurch gekennzeichnet, dass** dieses mit einer Lösung auf Basis von Kalium-, Natrium- oder Ammonium-Citraten, einzeln oder als Gemisch, die In reiner wässriger Lösung einen pH-Wert von 6 bis 7 ergeben, In einer Menge von mindestens 0,1 g Citrat/l Brühwasser, getränkt ist.

## Claims

1. Process for the preparation of hot tea beverages intended for immediate consumption by using leaves of black or green tea or mixtures of these and of untreated water from the local drinking water supply as brewing water, **characterized in that** potassium, sodium or ammonium citrates, which display a pH value of 5 to 7 in pure aqueous solutions, are added separately or as a mixture, before or during the heating of the brewing water or during the brewing process.

2. Process according to claim 1 **characterized in that** diammonium, dipotassium or disodium citrate in mixtures with up to 90 mol% of monoammonium, monopotassium or monosodium citrate are used as citrates.

3. Process according to claims 1 or 2 **characterized in that** the mixture of citrates is formed either from citric acid and tertiary citrate or by corresponding partial neutralization of citric acid.

4. Process according to one of the claims 1 to 3 **characterized in that** the amount of citrate used is 0.1 to 2 g per I of brewing water.

5. Process according to one of the claims 1 to 4 **characterized in that** the required amount of citrate is added to the brewing water.

6. Process according to one of the claims 1 to 4 **characterized in that** the required amount of citrate is added to the tea leaves or the mixtures of these.

7. Process according to one of the claims 1 to 4 **characterized in that** the required amount of citrate is applied on a carrier material or that said material is soaked with a citrate solution, which is brought into contact with the brewing water.

8. Process according to one of the claims 1 to 4 **characterized in that** the required amount of citrate is added to a teabag filled with tea or that this tea bag is soaked with a citrate solution.

9. Process according to one of the claims 1 to 4 **characterized In that** the required amount of citrate is applied on a disposable tea filter or that said filter is soaked with a citrate solution.

10. Process according to one of the claims 1 to 9 **characterized in that** the amount of the quantities of citrate to be used is dosed depending on the carbonate hardness of the brewing water, with a reduction of the quantity to be used down to 0.1 g per I of brewing water at diminishing degrees of carbonate hardness.

11. Application of potassium, sodium or ammonium citrates, separately or as mixtures, which yield a ph-value of 5 to 7 In a pure aqueous solution, as an additive to the tea used and/ or the brewing water, for preparing of tea beverages designed for immediate consumption by using tea leaves of black or green tea or mixtures of these and untreated water from the local drinking water supply as brewing water.

12. Application according to claim 11, **characterized in that** the citrates are chosen from the group of diammonium, dipotassium or disodium citrates in a mixture with up to 90 mol% of monoammonium, monopotassium or monosodium citrate.

13. Application according to claim 11 or 12, **characterized In that** the quantity of citrate used amounts to between 0.1 and 2.0 g of citrate per I of brewing water.

14. Tea bag made from material containing cellulose for brewing tea, containing tea leaves of black or green tea or mixtures thereof, **characterized In that** this contains potassium, sodium or ammonium citrates, separately or as a mixture, which yield a pH-value of 5 to 7 In pure aqueous solutions, as an additive to an amount of at least 0.1 g/l of brewing water.

15. Tea bag according to claim 14, **characterized in that** the citrates are added to it or that the material of the tea bag is soaked with a citrate solution.

16. Disposable tea filter made of material containing cellulose for brewing black or green tea or mixtures of these, **characterized In that** this filter is soaked with a solution based on potassium, sodium or ammonium citrates, separately or as a mixture, which yield a ph-value of 5 to 7 in a pure aqueous solution, to an amount of at least 0.1 g of citrate per I of brewing water.

17. Carrier material to be brought into contact with water from the local drinking water supply grid as brewing water for brewing black or green tea or mixtures of these, **characterIzed In that** this material is soaked with a solution based on potassium, sodium or ammonium citrates, separately or as a mixture, which reach a pH-value of 5 to in a pure aqueous solution, to an amount of at least 0.1 g of citrate per I of brewing water.

## Revendications

1. Procédé pour la préparation de boissons chaudes au thé, prêtes-à-boire, en utilisant des fouilles de thé noir ou de thé vert ou de mélanges de ceux-ci et, comme eau bouillante, de l'eau non traitée, Issue du réseau d'alimentation local, **caractérisé en ce que**, avant et pendant que l'eau est portée à ébullition ou pendant l'ébullition, des citrates de potassium, de sodium ou d'ammonium sont rajoutés, seuls ou sous forme de mélange, donnant en solution aqueuse pure un pH compris entre 5 et 7.

2. Procédé selon la revendication 1, **caractérisé en ce que**, comme citrates, on utilise du citrate de diammonium, de dipotassium ou de disodium dans un mélange comprenant Jusqu'à 90 % en poids molaire de citrate de monoammonium, de citrate de monopotassium ou de citrate de monosodium.

3. Procédé selon l'une quelconque des revendications 1 ou 2, **caractérisé en ce que** le mélange de citrate est formé soit partir d'acide citrique ou de citrate tertiaire soit en neutralisant partiellement de façon adéquate l'acide citrique.

4. Procédé selon l'une quelconque des revendications 1 à 3, **caractérisé en ce que** la quantité de citrate utilisée est comprise entre 0,1 et 2 g/l d'eau bouillante.

5. Procédé selon l'une quelconque des revendications 1 à 4, **caractérisé en ce que** la quantité nécessaire de citrate est rajoutée à l'eau bouillante.

6. Procédé selon l'une quelconque des revendications 1 à 4, **caractérisé en ce que** la quantité de citrate nécessaire est rajoutée aux feuilles de thé ou à leurs mélanges.

7. Procédé selon l'une quelconque des revendications 1 à 4, **caractérisé en ce que** la quantité nécessaire de citrate est appliquée sur un matériau vecteur ou celui-ci est imbibé de solution de citrate mise au contact de l'eau bouillante.

8. Procédé selon l'une quelconque des revendications 1 à 4, **caractérisé en ce que** la quantité nécessaire de citrate est rajoutée à un sachet de thé rempli de thé ou le sachet de thé est imbibé de solution de citrate.

9. Procédé selon l'une quelconque des revendications 1 à 4, **caractérisé en ce que** la quantité nécessaire de citrate est appliquée à un sachet de thé à usage unique ou celui-ci est imbibé de solution de citrate.

10. Procédé selon l'une quelconque des revendications 1 à 9, **caractérisé en ce que** le niveau des quantités de citrate utilisées est dosé en fonction de la dureté en carbonate de l'eau bouillante, la quantité utilisée étant réduite à 0,1 g/l d'eau bouillante lorsque la dureté de carbonate diminue.

11. Utilisation de citrates de potassium, de sodium ou d'ammonium, seuls ou sous forme de mélange, donnant en solution aqueuse pure un pH compris entre 5 et 7, sous forme d'additif dans le thé utilisé et/ou l'eau bouillante, pour la préparation de boissons chaudes au thé, prêtes-à-boire, en utilisant des feuilles de thé noir ou de thé vert ou de mélanges de ceux-ci et, comme eau bouillante, de l'eau non traitée, issue du réseau d'alimentation local.

12. Utilisation selon la revendication 11, **caractérisée en ce que** les citrates sont choisis parmi le groupe citrate de diammonium, de dipotassium ou de disodium dans un mélange comprenant jusqu'à 90 % en poids molaire de citrate de monoammonium, monopotassium ou de monosodium.

13. Utilisation selon l'une quelconque des revendications 11 ou 12, **caractérisée en ce que** les quantités de citrate utilisées sont comprises entre 0,1 et 2 g/l d'eau bouillante.

14. Sachet de thé composé de matériau contenant de la cellulose pour des infusions de thé, comprenant des feuilles de thé noir ou vert ou de mélanges de ceux-ci, **caractérisé en ce que** celul-ci contient comme additif et dans une quantité d'eau bouillante d'au moins 0,1 g/l des citrates de potassium, de sodium ou d'ammonium, seuls ou sous forme de mélange, donnant en solution aqueuse pure un pH compris entre 5 et 7.

15. Sachet de thé selon la revendication 14, **caractérisé en ce que** les citrates sont rajoutés à celui-ci ou le matériau du sachet de thé est imbibé dans une solution de citrate.

16. Filtre pour thé à usage unique composé de matériau en cellulose pour les infusions de thé noir ou vert ou de mélanges de ceux-ci, **caractérisé en ce que** celul-ci est imbibé, dans une quantité d'au moins 0,1 g de citrate par litre d'eau bouillante, d'une solution à base de citrates de potassium, de sodium ou d'ammonium, seuls ou sous forme de mélange, donnant en solution aqueuse pure un pH compris entre 5 et 7.

17. Matériau vecteur destiné à être mis au contact de l'eau issue du réseau d'alimentation local sous forme d'eau bouillante pour les infusions de thé noir ou vert ou de mélanges de ceux-ci, **caractérisé en ce que** celui-ci est imbibé, dans une quantité d'au moins 0,1 g de citrate par litre d'eau bouillante, d'une solution à base de citrates de potassium, de sodium ou d'ammonium ou sous forme de mélange, donnant en solution aqueuse pure un pH compris entre 5 et 7.
